# EUROPÄISCHE PATENTANMELDUNG

(11) **EP 0 666 122 A1**
(43) Veröffentlichungstag der Anmeldung: **09.08.1995**
(21) Anmeldenummer: 95100103.1
(22) Anmeldetag: 05.01.1995
(51) Int. Cl.: B21B 1/46, B21B 45/00, B21B 37/52

(54) **Verfahren und Anlage zur Herstellung von warmgewalztem Stahlband aus stranggegossenem Vormaterial**

(30) Priorität: 27.01.1994 DE 4402402
(71) Anmelder: SMS SCHLOEMANN-SIEMAG AKTIENGESELLSCHAFT, D-40237 Düsseldorf (DE)
(72) Erfinder: Rohde, Prof. Dr. Wolfgang, D-41542 Dormagen (DE); Kneppe, Dr. Ing. Günther, D-57271 Hilchenbach (DE)
(74) Vertreter: Valentin, Ekkehard, Dipl.-Ing.

(57) **Zusammenfassung**

Bei einem Verfahren zur Herstellung von warmgewalztem Stahlband (11) aus stranggegossenem Vormaterial (3) in aufeinanderfolgenden Arbeitsschritten, wobei das bandförmige Vormaterial (3) nach Erstarrung auf Warmwalztemperatur gebracht und zum Auswalzen zu Fertigband (11) in ein mehrgerüstiges Walzwerk (6) eingeführt wird, wird bei gegebener Materialfestigkeit, Gerüstanzahl und Antriebsleistung sowie im Hinblick auf Grenzen der Walzgeschwindigkeit, Drehmomente und/oder Walzkräfte eine geforderte minimale Enddicke von unter 2 mm dadurch erreicht, daß das Walzgut (5) zumindest zwischen dem ersten (7a) und dem zweiten Gerüst (7b) aufgeheizt wird. Vorzugsweise geschieht dies durch eine Induktionsheizung (8a), um einen vorgegebenen Temperaturbetrag.

## Beschreibung

Die Erfindung betrifft ein Verfahren zur Herstellung von warmgewalztem Stahlband aus stranggegossenem Vormaterial in aufeinanderfolgenden Arbeitsschritten, wobei das bandförmige Vormaterial nach Erstarrung auf Warmwalztemperatur gebracht und zum Auswalzen zu Fertigband in ein mehrgerüstiges Walzwerk eingeführt wird.

Entsprechend einer neu entwickelten Technologie für die wirtschaftliche Erzeugung von Warmbreitband wird in einer in besonderer Weise ausgebildeten Stranggießmaschine eine sogenannte Dünnbramme von beispielsweise 50 mm Dicke erzeugt. Die Dünnbramme wird nach Erstarren sowie Temperaturausgleich in einem Rollenherdofen der Walzstraße zugeführt und auf die geforderte Enddicke ausgewalzt.

Bei der Auslegung der Walzanlage kommt es aus Gründen der Wirtschaftlichkeit darauf an, möglichst wenig Walzgerüste zu verwenden. Es wurden bereits Anlagen ausgeführt, die mit nur vier Walzgerüsten bei Bandbreiten bis zu 1350 mm für Stähle mit niedrigem C-Gehalt das Erreichen einer Enddicke von 2,5 mm ermöglichen. Eine derartige Anlage ist beispielsweise aus der DE-36 37 893 A1 bekannt. Bei dem bekannten Verfahren bzw. der entsprechenden Anlage wird das bandförmige Vormaterial nach Erstarrung auf Walztemperatur gebracht und zum Auswalzen zu Fertigband in ein Walzwerk eingeführt, wobei das Auswalzen kontinuierlich in maximal drei oder vier Walzgerüsten bei möglichst hohen Stichabnahmen erfolgt. Dabei wird in den ersten zwei Gerüsten mit etwa maximalem Walzmoment und großem Arbeitswalzendurchmesser gearbeitet.

Bei geringeren Enddicken und größerer Walzgutbreite sind jedoch mehr Gerüste erforderlich. Dies hat zur Folge, daß wegen des erhöhten Temperaturabfalls durch die größere Länge der Anlage eine Erhöhung der Walzgeschwindigkeit in Kauf genommen werden muß. Dies ist jedoch aus Gründen der hierfür erforderlichen erhöhten Antriebsleistungen vielfach nicht wünschenswert und auch nicht durchführbar. Zudem werden in einer Straße üblicherweise nicht mehr als sieben Gerüste in Betracht gezogen.

Dennoch ist beispielsweise bei erhöhten Materialfestigkeiten fallweise auch eine siebengerüstige Straße bei großen Breiten nicht in der Lage, Enddicken von weniger als 2 mm zu erreichen. Wesentliche Ursache für diese Begrenzung der Abnahmekapazität ist der Sachverhalt, daß im ersten Gerüst wegen des dort vorliegenden Gußgefüges die zulässige Abnahme begrenzt werden muß. Dies ist von besonderem Nachteil, weil im ersten Gerüst die Walztemperatur noch in der Größenordnung von 1000 Grad Celsius liegt, wobei infolge der geringen Materialfestigkeit große Abnahmen möglich wären. Dagegen ist im zweiten Gerüst das Material bereits weitestgehend rekristallisiert und die Temperatur des Walzgutes um etwa 50 Grad Celsius abgesunken. Hierdurch ist die mögliche Stichabnahme im zweiten Gerüst durch das erforderliche Walzmoment oder durch die erforderliche Walzkraft begrenzt. Selbst bei Nutzung der maximalen Gerüstkapazität im zweiten und allen folgenden Gerüsten kann die gewünschte Enddicke von weniger als 2 mm vielfach nicht erreicht werden.

Der Erfindung liegt die Aufgabe zugrunde, ein Verfahren und eine Anlage anzugeben, mit welchen die vorgenannten Schwierigkeiten und technischen Grenzen überwunden werden und ohne Erhöhung der Gerüstzahl oder der Antriebsleistung eine Enddicke von weniger als 2 mm beim Auswalzen einer etwa 50 mm dicken Dünnbramme erreicht wird.

Die Lösung der Aufgabe gelingt bei einem Verfahren nach der Erfindung dadurch, daß das Walzgut zumindest zwischen dem ersten Gerüst und dem zweiten Gerüst aufgeheizt wird.

Diese Maßnahme führt mit Vorteil zu einer Erhöhung der Anstichtemperatur im zweiten Gerüst, die auch zu einer Erhöhung der Anstichtemperaturen in allen weiteren Folgegerüsten führt, wodurch insgesamt im zweiten und in allen weiteren Gerüsten größere Abnahmekapazitäten erreicht werden. Insgesamt führt die Maßnahme zu einer deutlichen Erhöhung der Gesamt-Abnahmekapazität des Walzwerks und damit zur Erzielung der gewünschten Enddicken von weniger als 2 mm. Dabei ist vorzugsweise vorgesehen, daß das Walzgerüst im Durchlauf durch eine Induktionsheizung um einen vorgegebenen Temperaturbetrag aufgeheizt wird.

Eine Ausgestaltung sieht vor, daß das Walzgut zwischen dem ersten und dem zweiten Gerüst auf die gleiche Anstichtemperatur wie im ersten Gerüst aufgeheizt wird.

Eine weitere Ausgestaltung sieht vor, daß auch hinter dem zweiten Gerüst und ggf. hinter weiteren Folgegerüsten eine Aufheizung des Walzgutes vorgenommen wird.

Ferner ist mit der Erfindung vorgesehen, daß eine Aufheizung des Walzgutes zwischen wenigstens zwei Gerüsten in Abhängigkeit von der geforderten Enddicke bei gegebener Materialfestigkeit und Gerüstanzahl im Hinblick auf die begrenzte Walzgeschwindigkeit, Drehmomente und/oder Walzkräfte bei nicht ausreichender Abnahmekapazität vorgenommen wird.

Weil eine induktive Heizung sowohl zu- und abschaltbar als auch in der Intensität einstellbar ist, kann mit dem erfindungsgemäßen Verfahren eine äußerst feinfühlige und regelbare Anpassung der Walzguttemperatur an optimale Walzparameter jedes einzelnen Gerüstes vorgenommen werden. Damit wird das vorgegebene Ziel der Erreichung einer minimalen Ausgangsdicke beim Walzgut ohne Erhöhung der Gerüstanzahl und ohne Erhöhung der Antriebsleistung bzw. der Walzgeschwindigkeit in unkomplizierter Weise verwirklicht.

Eine weitere Ausgestaltung der Erfindung sieht vor, daß der Gleichlauf von jeweils zwei Walzgerüsten, zwischen welchen eine Aufheizung des Walzgutes vorgenommen wird, mit Hilfe einer Minimalzugregelung schlingenfrei geregelt wird.

Eine Bandgießanlage mit nachgeordnetem mehrgerüstigem Kontiwalzwerk zur Herstellung von warmgewalztem Stahlband aus bandförmig stranggegossenem Vormaterial in aufeinanderfolgenden Arbeitsschritten, wobei das bandförmige Vormaterial nach Erstarrung auf Walztemperatur gebracht und zum Auswalzen zu Fertigband in das Walzwerk eingeführt wird, sieht zur Durchführung des Verfahrens vor, daß das Walzwerk zwischen dem ersten Walzgerüst und dem zweiten Walzgerüst eine Induktionsheizung aufweist. Weitere Ausgestaltungen sind entsprechend den Unteransprüchen vorgesehen.

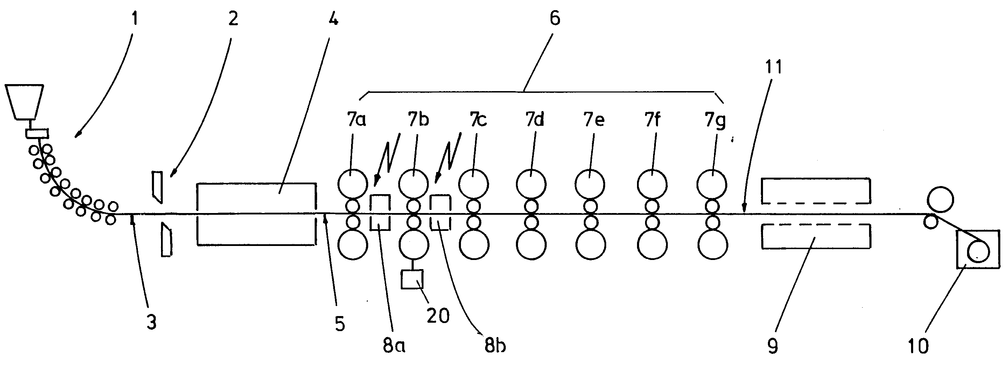

Einzelheiten, Merkmale und Vorteile der Erfindung sind aus der nachfolgenden Erläuterung eines in der Zeichnung schematisch dargestellten Ausführungbeispieles ersichtlich. Die Figur zeigt eine Prinzipskizze der erfindungsgemäßen Anlage in Seitenansicht. Darin ist mit (1) eine Band- bzw. Stranggießanlage bezeichnet, der eine Querteileinrichtung (2), beispielsweise eine Brennschneidmaschine oder Schere zum Trennen des gegossenen und die Bandgießanlage (1) verlassenen Bandes (3) in Teilstücke gleicher Länge nachgeschaltet ist. Die einzelnen Teillängen des Bandes (3) werden sodann in einer Speicher- und Wärmeeinrichtung (4), beispielsweise einem Rollenherdofen zwischengespeichert und auf eine homogene Warmwalztemperatur von etwa 1050 bis 1100 Grad Celsius gebracht. Eine den Ofen (4) verlassene Teillänge (5) wird in bekannter Weise entzundert und ggf. auch auf eine neue Vorbandlänge gebracht (nicht dargestellt). Danach wird das Teilband (5) in einer Walzstraße (6), bestehend aus vorzugsweise sieben Gerüsten (7a bis 7g) vom Ausgangsquerschnitt auf Endwalzdicke unter 2 mm fertiggewalzt.

Das Walzwerk (6) weist zwischen dem ersten Walzgerüst (7a) und dem zweiten Walzgerüst (7b) eine Induktionsheizung (8a) auf.

Die Erfindung soll jedoch nicht nur hierauf beschränkt sein, vielmehr kann gemäß einer weiteren Ausgestaltung vorgesehen sein, daß hinter dem zweiten Gerüst (7b) und ggf. hinter weiteren Folgegerüsten (7c) usw. wenigstens eine weitere Induktionsheizung (8b usw.) angeordnet ist. Darüberhinaus kann vorzugsweise den der Induktionsheizung (8a) nachgeordneten Walzgerüst (7b) eine schlingenfreie Minimalzugregelung (20) zugeordnet sein.

Die erfindungsgemäßen Maßnahmen sind nicht auf das in der Zeichnung dargestellte Ausführungsbeispiel beschränkt. So können beispielsweise, ohne den Rahmen der Erfindung zu verlassen, eine oder mehrere Induktionsheizungen nach Maßgabe der vom entsprechenden Walzgerüst aufgenommenen Antriebsleistung bzw. Walzkraft eingeregelt werden. Auch kann die Maßnahme nach der Erfindung in einem Walzwerk verwendet werden, welches eine andere Anzahl von Gerüsten aufweist, beispielsweise auch bei einem Reversiergerüst.

## Patentansprüche

1. Verfahren zur Herstellung von warmgewalztem Stahlband (11) aus stranggegossenem Vormaterial (3) in aufeinanderfolgenden Arbeitsschritten, wobei das bandförmige Vormaterial (3) nach Erstarrung auf Warmwalztemperatur gebracht und zum Auswalzen zu Fertigband (11) in ein mehrgerüstiges Walzwerk (6) eingeführt wird, **dadurch gekennzeichnet**, daß das Walzgut (5) zumindest zwischen dem ersten Gerüst (7a) und dem zweiten Gerüst (7b) aufgeheizt wird.

2. Verfahren nach Anspruch 1, **dadurch gekennzeichnet**, daß das Walzgut (5) im Durchlauf durch eine Induktionsheizung (8a, 8b usw.) induktiv, um einen vorgegebenen Temperaturbetrag aufgeheizt wird.

3. Verfahren nach Anspruch 1 oder 2, **dadurch gekennzeichnet**, daß das Walzgut (5) auf die gleiche Anstichtemperatur wie im ersten Gerüst (7a) aufgeheizt wird.

4. Verfahren nach Anspruch 1, **dadurch gekennzeichnet**, daß auch hinter dem zweiten Gerüst (7b) und gegebenenfalls hinter weiteren Folgegerüsten (7c bis 7n) eine Zwischen- Aufheizung des Walzgutes (5) vorgenommen wird.

5. Verfahren nach einem oder mehreren der Ansprüche 1 bis 4, **dadurch gekennzeichnet**, daß eine Aufheizung des Walzgutes (5) zwischen wenigstens zwei Gerüsten (7a, 7b usw.) in Abhängigkeit von der geforderten Enddicke bei gegebener Materialfestigkeit und Gerüstanzahl im Hinblick auf begrenzte Walzgeschwindigkeit, Drehmomente und/oder Walzkräfte bei nicht ausreichender Abnahmekapazität vorgenommen wird.

6. Verfahren nach einem oder mehreren der Ansprüche 1 bis 5, **dadurch gekennzeichnet**, daß der Gleichlauf von jeweils zwei Walzgerüsten (7a, 7b), zwischen welchen eine Aufheizung des Walzgutes (5) vorgenommen wird, mit Hilfe einer Minimalzugregelung (20) schlingenfrei geregelt wird.

7. Bandgießanlage (1) mit nachgeordnetem mehrgerüstigem Kontiwalzwerk (6) zur Herstellung von warmgewalztem Stahlband (11) aus einem bandförmig stranggegossenen Vormaterial (3) in aufeinanderfolgenden Arbeitsschritten, wobei das bandförmige Vormaterial (3) nach Erstarrung auf Walztemperatur gebracht und zum Auswalzen zu Fertigband (11) in das Walzwerk (6) eingeführt wird, zur Durchführung des Verfahrens nach einem oder mehreren der vorhergehenden Ansprüche, **dadurch gekennzeichnet**, daß das Walzwerk (6) zumindest zwischen dem ersten Walzgerüst (7a) und dem zweiten Walzgerüst (7b) eine Induktionsheizung (8a) aufweist.

8. Anlage nach Anspruch 7, **dadurch gekennzeichnet**, daß hinter dem zweiten Gerüst (7b) und gegebenenfalls hinter weiteren Folgegerüsten (7c usw.) wenigstens eine weitere Induktionsheizung (8b usw.) angeordnet ist.

9. Anlage nach Anspruch 7 oder 8, **dadurch gekennzeichnet**, daß einem einer Induktionsheizung (8a) nachgeordneten Walzgerüst (7b) eine schlingenfreie Minimalzugregelung (20) zugeordnet ist.
